(19) Europäisches Patentamt
European Patent Office
Office européen des brevets

(11) Publication number: 0 403 437 A2

# (12) EUROPEAN PATENT APPLICATION

(21) Application number: 90810430.0

(51) Int. Cl.5: C09K 7/06

(22) Date of filing: 13.06.90

(30) Priority: 15.06.89 GB 8913820

(43) Date of publication of application:
19.12.90 Bulletin 90/51

(84) Designated Contracting States:
BE CH DE FR GB IT LI NL

(71) Applicant: SANDOZ LTD.
Lichtstrasse 35
CH-4002 Basel(CH)
(84) BE CH FR GB IT LI NL

Applicant: SANDOZ-PATENT-GMBH
Humboldtstrasse 3
D-7850 Lörrach(DE)
(84) DE

(72) Inventor: Bennett, Brian
19 Royds Hall Lane
Bradford 6(GB)
Inventor: Graham, Margaret Helen
93 Victoria Mount, Horsforth
Leeds LS18 4PZ(GB)

## (54) Oil based drilling fluids.

(57) The performance of an oil drilling fluid is improved by the incorporation of a polymer containing two or more identical or different recurring units of formula I (hereinafter referred to as Polymer I) and/or a polymer containing two or more identical or different recurring units of formula II (hereinafter referred to as Polymer II)

$-R_1 - CONH -(R_2 - NH)_x - R_2NHCO -$ (I)

$- R_1 - CONH -(R_2 -NR_5)_x - R_2 - NHCO - R_3 - CONH -(R_2-NR_5)_x - R_2NHCO-$ (II)

in which $R_1$ is $C_{30-54}$ alkylene or $C_{30-54}$ alkenylene;

$R_5$ is hydrogen or $-CO-R_4$; provided that at least one group $R_5$ is hydrogen and at least one group $R_5$ is $-CO-R_4$ in Polymer II;

$R_2$ is a $C_{2-8}$ alkylene; preferably $C_{2-3}$ alkylene

$R_3$ is $C_{2-12}$ alkylene or phenylene,

$R_4$ is $C_{12-22}$ alkyl; $C_{12-22}$ alkenyl, hydroxy $C_{12-22}$ alkyl; or hydroxy $C_{12-22}$ alkenyl; or phenyl, unsubstituted or monosubstituted by a $C_{1-4}$ alkyl or $C_{1-4}$ alkoxy group; and

x is an integer from 1 to 10 preferably 1 to 6.

EP 0 403 437 A2

# OIL BASED DRILLING FLUIDS

The invention relates to oil based drilling fluids and additives therefor.

Circulating fluids are required in the rotary drilling of formations containing hydrocarbons. These circulating fluids are referred to as drilling muds. There are two major types of emulsion drilling fluids or muds, generally identified as oil-in-water emulsions and water-in-oil emulsions, each having its particular requirements, advantages and problems. Water-in-oil emulsions (oil-mud) are preferred in many applications.

These oil-mud circulating fluids are pumped down the drill pipe and out into the wellbore through holes in the drill bit and back up the well in the annular space between the drill pipe and walls of the wellbore, carrying with it drill cuttings and the like that are then removed before recirculation. This mud performs a number of functions, including removing drill cuttings, lubricating and keeping the bit cool, providing floatation to help support the weight of the drill pipe and casing, coating the wellbore surface to prevent caving in and undesirable flow of fluids in or out of the wellbore, including drilling fluids, brine, and the like.

Obviously, the properties of and the compositions of these drilling mud formulations are complex and variable, depending on the conditions involved and the results desired or required including reuse and recycling of mud formulations. One of the most important properties of these drilling muds and other drilling fluids is that they be thermally stable and do not present rheological and thixotropic problems under the conditions of drilling.

A major constituent of these oil based drilling muds are colloidal or gelling agents, normally organophilic clays. Large amounts of the clays are often required to obtain the desired thixotropic properties in the mud formulations. It is difficult to readily incorporate these large amounts of clays into formulations. It is an object of this invention to provide improved formulations using less of the clays without loss of the required thixotropic and thermal properties of the oil-mud formulations.

Host organophilic clays will not yield or swell in the low viscosity, low aromatic content mineral seal oils often used in drilling mud formulations. While heat of about 120 to 160 °C will aid in the swelling or activation of the clay particles, most on-site mud mixing facilities do not have the capability of heating the oil during the large volume initial oil-mud makeup. While high shear may also be used to provide heat through frictional forces, to aid the clay particles to swell, most mixing plants do not have high shear equipment, which is expensive initially and in energy requirements and time. Further, because of relatively low yield, higher concentrations of organophilic clays are often required. The excessive amounts required initially cause major problems after hole displacement because of subjection to, and subsequent yield of the organophilic clays, to high downhole temperatures. It is another objective of this invention to maximize the yield of the organophilic clay in a short time, at low shear rates, and to obtain savings in both time and materials in oil based mud formations.

Organophilic clays have long provided rheology control in oil continuous fluids. Systems using diesel oil as the external phases show substantial variation in performance of organophilic clays, caused by two variables in the diesel oil. The first is that the chemical composition of diesel oil varies widely because of variations in origin and refining of oil. Second, additives to diesel marketed as fuel include corrosion inhibitors and various surfactants. These additives create unpredictable effects upon performance of organophilic clays. Because the needs of the drilling industry for diesel oil are a small segment of the diesel market, additive-free diesel for drilling is not readily available.

Variations in diesel oil have typically been resolved by adding higher concentrations of organophilic clays, up to 25 percent more, to achieve desired yield point and gel structure, but at the expense of disproportionate increase in plastic viscosity, with a resulting decrease in shear thinning properties of the fluid. Performance of organoclays is further complicated with the introduction of mineral seal oils wherein the aromatic content was decreased to a level that made organophilic clays almost inoperable, and variability in chemical composition became an unknown to supplier and user. All the new low viscosity oils required much higher concentrations of organoclays to develop rheology properties equivalent to those of a similar diesel oil system resulting in formulation difficulties.

Organophilic clays do not respond to temperature changes predictably, especially on initial makeup, and for temperatures between ambient and 150 °F (=66 °C). Most oil mud rheologies are measured at 115 °F (=46 °C) or 150 °F (=66 °C). The mud itself may not be exposed to any temperature above ambient until the well site, where it may be exposed to 300 °F (=149 °C). Typically, the fluid goes into the hole as a relatively thin fluid, the temperature of the hole causes the organoclay to further yield with a corresponding increase in viscosity, with a need for dilution resulting.

In an organoclay formulation with equivalent yield and gel values at room temperature and after being

exposed to high temperature, the variation between ambient and 150° F (=66° C), the heat aged rheological and thixotropic qualities should be minimal. An organoclay that will develop thixotropy and produce non-newtonian fluids at ambient temperatures with a minimum of shear is needed.

Fluids formulated with low viscosity oils should have lower plastic viscosities than similar fluids formulated with diesel oil. Much of this potential advantage is lost when higher concentrations of organoclay are required to achieve adequate rheological properties (yield point) and thixotropy (gel strength). Organophilic clays will viscosify low viscosity oils, but they act more as thickeners than thixotropes. They may have yield point and gel strength, but the plastic viscosity is such that shear thinning properties are reduced. It is more difficult to develop gel structure in low viscosity oils than in diesel oil. Yield point develops first and with higher concentrations of organoclay, gel strengths can be produced. By the time adequate gels are developed, the fluids will have higher plastic viscosities and yield points than desired. While this is true for both type of oils; the problem is more severe for low viscosity oils.

The introduction of low viscosity mineral seal oil fluids created several problems in application of organoclays. First, development of gel strengths in low viscosity oil fluid is much more costly than in diesel oil, especially for rheological properties at relatively low temperatures (below 150° F =66° C). Second, low viscosity oils require higher concentration of organoclay. In diesel oil fluids, drilling fluid grade organoclays develop viscosities at room temperature. But at room temperature, a low viscosity oil may require two to three times as much viscosifier for the same rheology.

According to the invention there is provided a process to improve the performance of an oil drilling fluid by the incorporation of a polymer containing two or more identical or different recurring units of formula I (hereinafter referred to as Polymer I) and/or a polymer containing two or more identical or different recurring units of formula II (hereinafter referred to as Polymer II)

$-R_1 - CONH -(R_2 - NH)_x - R_2NHCO -$ (I)

$- R_1 - CONH -(R_2 -NR_5)_x - R_2 - NHCO - R_3 - CONH -(R_2-NR_5)_x - R_2NHCO-$ (II)

in which $R_1$ is $C_{30-54}$ alkylene or $C_{30-54}$ alkenylene;

$R_5$ is hydrogen or $-CO-R_4$; provided that at least one group $R_5$ is hydrogen and at least one group $R_5$ is $-CO-R_4$ in Polymer II;

$R_2$ is a $C_{2-8}$ alkylene; preferably $C_{2-3}$ alkylene

$R_3$ is $C_{2-12}$ alkylene or phenylene,

$R_4$ is $C_{12-22}$ alkyl; $C_{12-22}$ alkenyl, hydroxy $C_{12-22}$ alkyl; or hydroxy $C_{12-22}$ alkenyl; or phenyl, unsubstituted or monosubstituted by a $C_{1-4}$ alkyl or $C_{1-4}$ alkoxy group; and

x is an integer from 1 to 10 preferably 1 to 6.

Preferably Polymer I and II consist essentially of recurring units of formula I and II respectively.

Preferably the molecular weight is 2500 to 15000, more preferably 2500 to 6000.

Preferably there are at least 4 recurring units of formula I or II, more preferably 4-25, most preferably 4-10.

Polymers I and Polymers II are known. Polymers I are the reaction products of a dimer or trimer fatty acid and a di- or poly- alkylene polyamine. Polymers II can be prepared by reacting the aforementioned Polymer I obtained from a mixture of dimer and/or trimer fatty acid and other dibasic acids at high temperature e.g. 130-200° C with $R_4$-COOH an appropriate monobasic acid such as stearic acid.

Polymers I are described in "The Dimer Acids" edited by Edward C. Leonard published by Humko Sheffield Chemical Corp. (1975), which publication is herewith incorporated by reference.

Polymers I and/or II improve the performance of all oil-mud formulations, particularly those containing organophilic clays, in diesel and low viscosity oils (LVO). They are designed to produce fluids, formulated with LVO, with properties equal to or higher than fluid formulated with diesel oil. They are also designed to provide more shear thinning fluids with improved thixotropy, especially at lower temperatures. The additives extend the utility of organoclays in low viscosity oil mud systems. They produce a more shear thinning fluid, higher yield points, and quicker gel strengths while maintaining low plastic viscosities. They are true thixotropic additives, not just an oil mud gellant or viscosifier only.

The terms "dimer fatty acid" and "trimer fatty acid" as used in this Specification mean, respectively, a dibasic acid resulting from condensation of two molecules of an unsaturated fatty acid or ester (dimerization) and a tribasic acid resulting from condensation of three molecules of an unsaturated fatty acid or ester (trimerization). Such products have been known for many years and have been used commerically since the late 1940's. They are discussed in detail in the monograph entitled "The Dimer Acids - The chemical and physical properties, reactions and applications of polymerised fatty acids", edited by Edward C. Leonard, Humko Sheffield Chemical (1975) of which Chapter 1, "The General Characterization of Dimer Acids", By Berman and Loeb, is incorporated herein by reference.

The fatty acid used for preparing Polymer I and II may be a dimer acid, a commercial product prepared

by dimerization of unsaturated acids, including 9-dodecenoic(cis), 9-tetradecenoic(cis), 9-octadecenoic(cis), and the like. The typical molecule would contain two carboxyl groups and about 36 carbon atoms in a branched chain configuration. A trimer acid may be used which is also a commercial material and similarly prepared, containing about 54 carbon atoms. Mixtures of dimer acids, trimer acids, and monocarboxylic acids may also be used.

A typical example is UNIDYME 14 dimer acid, a tall oil derivative containing 96% dimer acid of $C_{18}$ unsaturated acids (oleic acid), 3% trimer acid, 1% monomer with 195 acid number and 200 saponification number, specific gravity 0.95 at 25° C.

The di- and poly-alkylene polyamines include materials in which the alkylene groups contain 2 to 8 carbon atoms, preferably 2 to 3 carbon atoms; "poly" refers to an integer from about 1 to 10 (see below) and at least 3 nitrogen atoms. These materials may be represented by the general formula

$H_2N - C_pH_{2p} -(NH - C_pH_{2p})_q - NH_2$

in which p is an integer of 2 to 8 and q is an integer of 1 to 10.

Typical useful di- and poly- alkylene polyamines include diethylene triamine, triethylene tetraamine, tetraethylene pentaamine, polyamine HH, polyamine HPA, and the like. Preferred are diethylene triamine and triethylene tetraamine.

In preparing drilling fluids containing Polymer I and/or II, the polymer may be added at any stage of preparation at any time to any oil based mud. It may be added to the organophilic clay before the clay is added to the drilling fluid, or it may be added during the preparation of the organophilic clay during reaction of the clay with organic ammonium salts. In any event, to obtain the advantages of the invention, the method of introduction of Polymer I or II is not critical. It is more efficient to add Polymer I or II as a drilling fluid ingredient with other ingredients for use in a variety of formulations.

Where Polymer I and/or II are used in drilling mud formulations, the polymer may be added as such or as a formulation with a suitable polar solvent (such as methanol) and/or kerosene containing also further additives such as dimer or trimer acids, as may be suitable for the envisaged use.

Further according to the invention there is provided a polymer formulation comprising

a) a Polymer I and/or II; and

b) an oil miscible solvent, preferably an alcohol (such as methanol), a low toxicity diesel fuel or kerosene.

Preferably such a polymer formulation additionally contains a dimer and/or trimer acid.

A preferred polymer formulation according to the invention comprises

a) 10-90% (preferably 20-50%) of Polymer I and/or II;

b) 10-90% (preferably 30-80%) of oil miscible solvent, preferably an alcohol (such as methanol); a low toxicity diesel fuel or kerosene; and

c) 0 to 60% (preferably 15-40%) by weight of a dimer and/or trimer acid; (all percentages in the formulation being by weight).

A most preferred formulation according to the invention comprises

a) about 25% of Polymer I and/or II; preferably Polymer I;

b) about 50% of oil miscible solvent; and

c) about 25% of dimer and/or trimer acid.

The amount of oil miscible solvent used is such that an easily mixed fluid solution or dispersion of the Polymer I and/or II is obtained. The amount of solvent will vary, depending on its effectiveness in reducing the viscosity of the Polymer I and/or II, as may be readily determined by those skilled in the art.

Further according to the invention there is provided a drilling mud composition containing

a) 98.0% to 99.9%, preferably 99.0% to 99.7%, weight by volume of a drilling mud; and

b) 0.1-2.0%, preferably 0.3% to 1%, weight by volume of a formulation based on Polymer I or II, the formulations of which contain 10 to 90% preferably 20 to 50% polymer by weight.

The compositions of this invention are directed to and particularly adapted to provide improved oil base drilling muds useful under conditions of high temperature and pressure, such as those encountered in deep wells, where many previously proposed and used formulations do not heat age well in operations under such high temperature and high pressure conditions.

Oil base mud formulations intended for use under high temperature (up to about 500° F ) and high pressure (up to about 25,000 psi - $1.72 \times 10^8$ Pa) conditions may contain a petroleum oil, a weighting agent, an emulsifier, a gelling or thixotropic agent, salts and a fluid loss control agent as the ingredients if desired. Water is often added but it may be introduced from the formations themselves during drilling.

The oil (continuous phase) used is a petroleum oil, generally diesel oil or mineral seal oil, although lighter oils such as kerosene, or heavier oils such as fuel oil, white oil, crude oil, and the like may also be used. The invention is particularly useful with low viscosity, low aromatic oils, No. 2 diesel oil and mineral

seal oils.

If water is used, the amount normally is small, and while usually is less than about 10 weight percent, amounts as high as about 60 volume percent may be present under some conditions.

Emulsifiers, both invert and wetting agents, include those normally used, including alkali and alkaline earth metal salts of fatty acids, rosin acids, tall oil acids, the synthetic emulsifiers such as alkyl aromatic sulfonates, aromatic alkyl sulfonates, long chain sulfates, oxidized tall oils, carboxylated 2-alkyl imidazolines, imidazoline salts, amido amines, alkoxy phenols, polyalkoxy alcohols, alkyl phenols, high molecular weight alcohols, and the like.

Water soluble salts often added to the formulations normally are the brine salts such as sodium chloride, potassium chloride, sodium bromide, calcium chloride, more preferably, and the like, usually in a water solution. Formation brines and seawater may be used. These salts are added to control the osmotic pressure of the formulations as needed, according to drilling conditions.

Weighting materials, if used, include such materials as calcium carbonate, silicate, clays, and the like, but more preferably are the heavier materials such as the barites, specular hematite, iron ores, siderite, ilmenite, galena, and the like.

The thixotropic thickening and gelling agents used in many oil-mud formulations are organophilic clays. The clays used may be any of those that have substantial base-exchange capacity. A variety of such materials are known to those skilled in the art, including Wyoming bentonite, montmorillonite, hectorite, attapulgite, illite, fullers earth, beidillite, saponite, vermiculite, zeolites, and the like. Wyoming swelling bentonite and hectorite are normally utilized. While the amido amines of this invention are especially effective when used with these clays, they also enhance the gel strength of formulations not containing clay.

To obtain the desired organophilic clays, the swelling bentonites and hectorites are reacted with functional organic compounds, as it is well known to those skilled in the art. The amount of organic compound used will be dependent on the reactivity of the clays used, but usually is from about 50 to 300 milliequivalents of an organic ammonium salt, for example, per 100 grams of clay. The reactions are normally conducted in water and the treated clay is separated and dried. Normally used are onium compounds, such as organic ammonium salts such as quaternary ammonium salts having the structural formula

$R_{12}$
+ /
$R_{11}-N-R_{13}$ $M^-$
\
$R_{14}$

in which
$R_{11}$ is $C_{1-20}$ alkyl
$R_{12}$ is $C_{1-20}$ alkyl;
$R_{13}$ is $C_{1-20}$ alkyl; and
$R_{14}$ is $C_{1-20}$ alkyl;
and at least one of $R_{11}$, $R_{12}$, $R_{13}$ or $R_{14}$ contains at least 12 carbon atoms, and M is Cl, Br, I, OH or $SO_4$.

Typical reactants include those containing quaternary ammonium cations selected from the group consisting of trimethyl octadecyl ammonium, methyl benzyl dicoco ammonium, methyl trihydrogenated tallow ammonium, methyl benzyl dihydrogenated tallow ammonium chloride, and the like. Descriptions of preparation of typical organophilic clays can be found in U.S. Patent Numbers 2,966,506; 4,105,578; 4,425,244.

The organophilic clay content of the oil-mud formulations will vary inversely as the density of the oil mud. The organoclay content may range from about 25 to 30 pounds per barrel (ppb) (= 71.5 to 85.8 g/l) in low densities, to almost 0 in high densities. Normally an amount from about 2 to about 15 pounds of clay per barrel of mud (5.72 to about 42.9 g/l) will be used. The degree of suspension or hole cleaning required or requested will have an impact on the clay concentration as is well known to those skilled in the art.

The organophilic clay used in the Examples was a commercial clay prepared by reacting a Wyoming swelling bentonite clay (smectite) in water with about 50 milliequivalents per 100 grams of clay of dimethyl ditallow ammonium chloride (commercially available as Perchem DMB) separating the clay and drying.

The invention will now be illustrated by the following Examples in which all parts and percentages are

by weight.

Example 1

21.0g of diethylene triamine are reacted with 114.2g of a commercially available dimer acid having 30-54 carbon atoms (commercially available as Unichema International Pripol 1055 or Sheba Chemicals Trademark SO 119), under vacuum and in a nitrogen atmosphere.

The reaction temperature is maintained at 100-120 °C during addition and then the temperature is raised to 170-175 °C (whilst still under vacuum) water is allowed to distill off. The reaction is completed when the acid value falls below 5 mg KOH. The reaction mixture is then cooled and discharged to yield 370 g of a compound having 4 to 10 repeating units of formula 1a.

$- R - CO - NH - R_2 - NH - R_2 - NHCO -$ (1a)

where R is a alkenylene group derived from the dimer acid and $R_2$ is $C_2H_4$.

To the 370g of the compound of formula 1a, 137g of the dimer acid above and 274g odorless Kerosene are added to produce a rheology modifier.

Example 2

103 g of diethylene triamine are added to a mixture of 434.5 g of a commercially available dimer acid and 36.5 g of adipic acid under a nitrogen atmosphere. The reaction mixture is maintained at 100-120 °C during addition and then the temperature is raised to 170-175 °C under nitrogen. Water is allowed to distill off and after 3 hours, 71g stearic acid is added and the reaction mixture stirred overnight. The reaction is cooled and discharged to yield 629 g of a compound having 4-10 repeating units of formula 2a

$$-R -CONH - C_2H_4NH - C_2H_4NHCO - C_4H_8 - CONH - C_2H_4\underset{|}{\overset{COC_{17}H_{35}}{N}} - C_2H_4NHCO - \qquad (2a)$$

where R is a $C_{36}$ alkenylene group.

To the 629 g of the compound of formula 2a, 329 g of methanol and 300 g of odourless Kerosene are added to form the rheology modifier of Example 2.

Example 3

A 50/50 mud recipe was made up as follows:

Table 1

| | |
|---|---|
| a) Drilling mud oil/water ratio | 50/50 |
| weight (ppg = pounds per gallon) | 9 ppg |
| b) Low toxic oil | 156.1 mls |
| c) Emulsifiers Primary | 7 g |
| Secondary | 7 g |
| d) Lime | 4 g |
| e) $CaCl_2$ (92-94%) | 55 g |
| f) Water | 156.1 g |
| g) Viscosifier Perchem DMB | 1 g |
| h) Barite | 15 g |

The secondary and primary emulsifier is as defined in European PCT Patent Application No. PCT/EP8900522 of 12.05.1989 in the name of Sandoz AG.

1 pound per barrel of the rheology modifier of Example 1 or 2 is added and the results of plastic viscosity PV, yield point YP, 10 second gel and 10 minutes gel as given in Table 2 below.

Table 2

| Mud formulation | | PV | YP 10sec | Gel 10 min | Gel |
|---|---|---|---|---|---|
| 1. 9 ppg 50/50 mud | B<br>A | 22.5<br>21.5 | 16.5<br>19 | 5.5<br>9 | 7<br>11 |
| 2. 9 ppg 50/50 mud + 1 ppb of rh. mod. of Ex 1. | B<br>A | 22.5<br>23.5 | 27.5<br>39 | 12<br>22 | 13<br>24 |
| 3. 9 ppg 50/50 mud + 1 ppb of rh. mod. of Ex 2. | B<br>A | 22<br>23 | 53.5<br>27 | 15<br>16 | 16<br>18 |
| B = before aging at 250° F<br>A = after aging at 250° F<br>(ppb = pounds per barrel) | | | | | |

The plastic viscosity remains substantially constant (slightly increased) for the muds with the rheology modifiers of Ex. 1 and 2. However the yield points and gel strengths are substantially increased.

Example 4

A 70/30 mud recipe was made up as follows:

Table 3

| | |
|---|---|
| a) Drilling mud oil water ratio | 70/30 |
| weight | 4 ppg |
| b) Low toxic oil | 201.1 g |
| c) Emulsifier Primary | 3 g |
| Secondary | 3 g |
| d) Lime | 4 g |
| e) $CaCl_2$ (92-94%) | 2.56g |
| f) Water | 75.25g |
| g) Viscosifier Perchem Hiclay | 5 g |
| h) Barite | 165 g |

1 ppb of a rheology modifier of Example 1 or 2 is added. The results of plastic viscosity, yield point and the 10 second and 10 minutes gets are as follows.

Table 4

| | | PV | YP | Gel 10 sec | Gel 10 min |
|---|---|---|---|---|---|
| 11 ppg - 70/30 mud | B<br>A | 20<br>26 | 12<br>10.5 | 7<br>10 | 12<br>19 |
| 11 ppg - 70/30 mud + 1 ppb of the rh. mod. of Ex. 1 | B<br>A | 22<br>23.5 | 18.5<br>12.0 | 13<br>13 | 22<br>16 |
| 11 ppg - 70/30 mud + 1 ppb of the rh. mod. of Ex. 2 | B<br>A | 21<br>27.5 | 13.0<br>7.5 | 9<br>8.5 | 17<br>18 |

The results of the 70/30 mud correlate with the 50/50 mud results in the case of Example 1, whereas Example 2 would require increased dosage.

In the application Examples, the low toxicicity oil used is that described in "The Oil Man" April 1983 pp. 45-49.

Example 5

Into a suitable vessel equipped for heating, stirring, nitrogen flow and vacuum, 924.8g of dimer acid are added and the stirrer and nitrogen flow are commenced. This is warmed to 100° C and 133.5g of diethylene triamine under a nitrogen atmosphere are added over a period of 30 minutes, allowing the temperature to rise 120-130° C. This is then warmed to 170-175° C over three hours and stirred at 170-175° C for two hours, allowing water to distill over. A vacuum is applied over 1 hour to 35 to 40 Torr and stirred for a minimum of 8 hours under vacuum until the acid value falls below 18mg KOH $g^{-1}$. This is then cooled to 80° C. This results in 1000g yield (58.3g of water and amines lost).

250 g of amine intermediate formed above are loaded into a vessel, stirring at 80° C. The heat is turned off and 400g of low toxicity diesel fuel (similar to Kerosene) are added. When the temperature reduces to the range 50-60° C, 125g of trimer acid and 125g dimer acid are added. This is then stirred at 50° C for half an hour and then cooled to 30° C and 85g of butyl glycol and 15g of methyl alcohol are added. This mixture is stirred at 30° C for 1 hour or until an homogenous mixture is obtained. The final formulation is then ready for use.

In the Examples, Perchem DMB and Perchem Hiclay are trademarks and are organophilic clays treated

with cationic products.

## Claims

1. A process to improve the performance of an oil drilling fluid which comprises incorporating therein a polymer containing two or more identical or different recurring units of formula I (hereinafter referred to as Polymer I) and/or a polymer containing two or more identical or different recurring units of formula II (hereinafter referred to as Polymer II)

$-R_1 - CONH -(R_2 - NH)_x - R_2NHCO -$ (I)

$- R_1 - CONH -(R_2 -NR_5)_x - R_2 - NHCO - R_3 - CONH -(R_2-NR_5)_x - R_2NHCO-$ (II)

in which $R_1$ is $C_{30-54}$ alkylene or $C_{30-54}$ alkenylene;

$R_5$ is hydrogen or $-CO-R_4$; provided that at least one group $R_5$ is hydrogen and at least one group $R_5$ is $-CO-R_4$ in Polymer II;

$R_2$ is a $C_{2-8}$ alkylene; preferably $C_{2-3}$ alkylene

$R_3$ is $C_{2-12}$ alkylene or phenylene,

$R_4$ is $C_{12-22}$ alkyl; $C_{12-22}$ alkenyl, hydroxy $C_{12-22}$ alkyl; or hydroxy $C_{12-22}$ alkenyl; or phenyl, unsubstituted or monosubstituted by a $C_{1-4}$ alkyl or $C_{1-4}$ alkoxy group; and

x is an integer from 1 to 10 preferably 1 to 6.

2. A process according to Claim 1 in which Polymer I and II have a molecular weight of from 2500 to 6000 inclusive.

3. A process according to any one of the preceding claims in which, in Polymers I and II there are 4-10 recurring units of formula I or II.

4.A polymer formulation comprising

a) a Polymer I and/or II as defined in Claim 1; and

b) an oil miscible solvent.

5. A polymer formulation according to Claim 4 in which the solvent is an alcohol, a low toxicity diesel fuel or kerosene.

6. A polymer formulation according to Claim 4 or Claim 5 which additionally contains a dimer and/or trimer acid.

7. A polymer formulation according to any one of Claims 4 to 6 which comprises

a) 10-90% of Polymer I and/or II;

b) 10-90% of oil miscible solvent; and

c) 0 to 60% by weight of a dimer and/or trimer acid; (all percentages in the formulation being by weight).

8. A drilling mud composition containing

a) 98.0% to 99.9%, weight by volume of a drilling mud; and

b) 0.1-2.0%, weight by volume of a formulation based on Polymer I or II, the formulations of which contain 10 to 80% polymer by weight.

9. A drilling mud composition according to Claim 8 in which in the formulation based on polymer I or II the amount of Polymer I or II present is 20 to 50% polymer by weight.

10. A drilling mud composition according to any one of Claims 8 or 9 in which the formulation based on Polymer I or II is a formulation according to any one of Claims 4 to 7.